# FASCICULE DE BREVET EUROPEEN

(11) **EP 1 365 305 B1**
(45) Date de publication et mention de la délivrance du brevet: **06.10.2004**
(21) Numéro de dépôt: 02100484.1
(22) Date de dépôt: 13.05.2002
(51) Int. Cl.: G06F 1/00

(54) **Enceinte anti-intrusion comprenant un maillage résistif**
Eindringgeschütztes Gehäuse mit Widerstandsmaschennetzwerk
Anti-intrusion housing comprising a resistive meshing

(43) Date de publication de la demande: 26.11.2003
(73) Titulaire: SAGEM S.A., 75015 Paris (FR)
(72) Inventeur: Dumont, Denis, 95880 ENGHIEN LES BAINS (FR)
(74) Mandataire: Schmit, Christian Norbert Marie

(56) Documents cités:
- EP-A- 0 509 567
- EP-A- 0 510 433
- US-A- 5 060 261
- US-A1- 2002 002 683
- WEINGART S H: "PHYSICAL SECURITY DEVICES FOR COMPUTER SUBSYSTEMS: A SURVEY OF ATTACKS AND DEFENSES" CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS, LECTURE NOTES IN COMPUTER SCIENCE, BERLIN: SPRINGER, DE, vol. 1965, 17 août 2000 (2000-08-17), pages 302-317, XP001049140 ISBN: 3-540-41455-X

## Description

La présente invention a pour objet une enceinte anti-intrusion pour protéger un accès à des composants électroniques au sein de l'enceinte et/ou à des données circulant entre ces composants électroniques. Plus particulièrement, l'invention concerne un boîtier sécurisé permettant de détecter toute tentative d'intrusion dans ce boîtier, une tentative d'intrusion pouvant éventuellement entraîner volontairement la destruction et/ou la mise hors service des composants électroniques au sein de l'enceinte selon l'invention.

Le domaine de l'invention est essentiellement celui des produits de sécurité informatique, et notamment celui des coffrets pour sécuriser des opérations effectuées par des serveurs informatiques dédiés notamment à des transactions financières. Ce type de serveur informatique intervient par exemple lors d'opérations d'achat via le réseau Internet : lorsqu'un client souhaite acheter un produit via le réseau Internet, un ensemble de procédures sont mises en place dans lesquelles un serveur informatique gère un ensemble de données relatives à la transaction en question, les données échangées étant le plus souvent chiffrées au moyen de clés numériques. Ce sont essentiellement ces clés qui doivent faire l'objet d'une protection toute particulière, et les composants électroniques mémorisant ou permettant l'accès à ces clés sont contenus dans des boîtiers sécurisés qui empêchent toute tentative d'accès physique à ces composants électroniques.

Dans l'état de la technique, le plus souvent, de telles enceintes anti-intrusions sont réalisées au moyen d'un boîtier d'un type donné autour duquel on dispose un fil conducteur de façon à réaliser un maillage serré autour de ce boîtier. Le fil conducteur ainsi enroulé est relié à un circuit de contrôle, qui permet de détecter une rupture de ce fil conducteur, une telle rupture étant alors interprétée comme une tentative d'intrusion. Cependant, ce type de maillage demeure difficile à réaliser : l'ajout du fil conducteur autour du boîtier à protéger est en effet réalisé le plus souvent manuellement et/ou doit faire l'objet de diverses opérations de soudure, rendant la fabrication industrielle de telles enceintes délicate. Par ailleurs, seule une rupture du fil conducteur entourant le boîtier peut être détectée, et une tentative d'intrusion ne provoquant pas une telle rupture peut passer inaperçue. La sécurité de tels boîtiers n'est en conséquence pas optimale.

La demande de brevet européenne EP-A-0 510 433 divulgue un autre type d'enceinte anti-intrusion qui comprend deux circuits imprimés montés face à face l'un de l'autre et connectés par des protubérances conductrices qui forment une portion d'un circuit d'entretien traversant les deux circuits imprimés. En cas de déplacement relatif des deux circuits imprimés pour tenter d'ouvrir l'enceinte, le circuit d'entretien est interrompu. Là encore, une tentative d'intrusion ne provoquant pas une telle rupture peut passer inaperçue.

L'enceinte anti-intrusion selon l'invention, permet de pallier les problèmes qui viennent d'être exposés. En effet, dans l'invention, l'enceinte anti-intusion comporte un maillage, pour détecter une tentative d'intrusion, qui est directement inséré dans les parois constituant l'enceinte. Ces différentes parois sont d'une part des circuits imprimés, de préférence multicouches, et d'autre part une structure conductrice composée d'un matériau souple comportant un ensemble de conducteurs parallèles intégrés dans ce matériau souple, cette structure conductrice étant communément appelée circuit "zébra". Selon l'invention, une ou plusieurs couches des circuits imprimés sont utilisées -voire réservées- pour disposer un ensemble de pistes conductrices qui vont former une partie du maillage de l'enceinte, les pistes conductrices d'un circuit imprimé étant reliées aux pistes conductrices de l'autre circuit imprimé via les conducteurs verticaux du circuit zébra. Des plaques de maintien sont disposées sur les deux circuits imprimés et viennent s'appuyer sur ces circuits imprimés de façon à comprimer le circuit zébra entre les deux circuits imprimés. Des moyens de fixations sont utilisés pour maintenir une pression constante sur le circuit zébra grâce à l'ajout de ces plaques de maintien.

Dans un mode de réalisation particulier de l'invention, le maillage se décompose en deux éléments de maillage principaux, chaque élément de maillage correspondant à un fil conducteur pouvant être constitué des pistes de circuits imprimées et/ou de conducteurs du circuit zébra. La réalisation d'un tel maillage permet d'exploiter un effet piézzo-résistif des éléments constituant le maillage pour détecter une tentative d'intrusion. Une variation de la résistance propre à un élément de maillage est détectée en utilisant par exemple chaque élément de maillage comme une résistance d'un pont de Wheatstone. A cet effet, un module de mémoire est associé à l'enceinte pour mémoriser deux valeurs initiales correspondant à la valeur de la résistance de chacun des éléments de maillage lors de la mise en service du dispositif électronique contenu dans l'enceinte. Les autres résistances constituant le pont de Wheaststone, ainsi qu'un dispositif de mesure de valeurs de résistance et de détection de variation de ces valeurs utilisé dans un tel montage en pont peuvent être disposés dans un circuit intégré de préférence contenu dans l'enceinte. Ainsi, lorsqu'on essaie par exemple de dévisser les plaques de maintien, la pression exercée sur le circuit zébra devient moins importante, ce qui a pour conséquence d'entraîner une variation de la résistance d'au moins un des éléments du maillage. Une rupture d'une piste conductrice ou d'un conducteur vertical constituant un des éléments de maillage entraîne évidemment une variation encore plus importante de la valeur de résistance associée à cet élément de maillage. Cette variation est détectée et interprétée comme une tentative d'intrusion. Dans un mode de réalisation particulier, les deux éléments de maillage sont équitablement répartis sur l'ensemble de la surface constituant le boîtier selon l'invention.

Selon l'invention, on utilise ainsi les technologies maîtrisées, qui sont la gravure de circuit imprimé, et l'interconnexion de pistes conductrices au moyen d'un circuit de type zébra, pour réaliser une enceinte possédant un maillage aussi précis que voulu, ce type de réalisation permettant de fabriquer de telles enceintes de façon industrielle.

L'invention concerne donc une enceinte anti-intrusion pour protéger un accès à des composants électroniques au sein de l'enceinte et/ou à des données circulant entre ces composants électroniques caractérisé en ce qu'il comporte :
- un premier circuit imprimé multicouches constituant une première paroi de l'enceinte, pouvant comporter un premier ensemble de couches constitué d'une ou plusieurs couches conductrices, ces couches conductrices pouvant présenter des pistes conductrices nécessaires à la circulation de signaux électriques utiles entre différents composants électroniques contenus dans l'enceinte, et comportant un deuxième ensemble de couches, constitué d'une ou plusieurs couches conductrices, présentant des pistes conductrices pour réaliser un premier morceau de maillage ;
- un deuxième circuit imprimé multicouches constituant une deuxième paroi de l'enceinte opposée à la première paroi, pouvant comporter un premier ensemble de couches constitué d'une ou plusieurs couches conductrices, ces couches conductrices pouvant présenter des pistes conductrices nécessaires à la circulation de signaux électriques utiles entre différents composants électroniques contenus dans l'enceinte, et comportant un deuxième ensemble de couches, constitué d'une ou plusieurs couches conductrices, présentant des pistes conductrices pour réaliser un deuxième morceau de maillage ;
- une troisième paroi, en forme de boucle, réalisée dans une matière souple contenant un ensemble de conducteurs parallèles constituant un troisième morceau de maillage pour assurer la jonction entre des points de connexion du premier morceau de maillage et des points de connexion du deuxième morceau de maillage, la troisième paroi assurant la fermeture de l'enceinte.

Dans certains modes de réalisation de l'enceinte selon l'invention, le premier ensemble de couches et le deuxième ensemble de couches du premier circuit imprimé ou du deuxième circuit imprimé ne sont pas nécessairement disjoints, c'est à dire que certaines couches conductrices peuvent simultanément présenter des pistes pour conduire les signaux utiles, et des pistes pour réaliser un morceau du maillage.

Dans un mode de réalisation particulier de l'enceinte selon l'invention, le maillage, formé de l'assemblage du premier, du deuxième et du troisième morceau de maillage, est constitué de deux éléments de maillage distincts, ces deux éléments étant entrelacés dans l'ensemble des parois constituant l'enceinte. Ainsi, chaque élément du maillage possédant une valeur résistive propre qui est mémorisée dans un module de mémoire, par exemple contenu dans l'enceinte, une variation relative de la valeur résistive de chaque élément de maillage permet de déterminer une tentative d'intrusion dans le boîtier. A cet effet, un microprocesseur est disposé à l'intérieur de l'enceinte pour exploiter une information relative à une variation relative de la valeur résistive de chaque maillage. Des moyens de détérioration d'un ou plusieurs composants électroniques de l'enceinte sont prévus au sein de l'enceinte, ces moyens étant mis en oeuvre lorsque lors d'une détection de variation relative de la valeur résistive de chaque maillage supérieure à une valeur seuil prédéterminée, cette valeur seuil pouvant être mémorisée dans le module de mémoire.

Dans certains modes de réalisation de l'invention, l'enceinte comporte une première plaque de maintien disposée sur une face externe de la première paroi, une deuxième plaque de maintien disposée sur une face externe de la deuxième paroi, la première et la deuxième plaque étant attachées entre elles par des moyens d'attache, par exemple des vis et des écrous de façon à exercer une pression constante sur les trois parois constituant l'enceinte. Chaque élément du maillage est disposé de façon régulière et équitable sur chaque paroi de l'enceinte. La finesse du pas de maillage doit être suffisante pour prévenir toute forme de tentative d'intrusion, c'est à dire inférieure au millimètre. Par ailleurs, dans certains modes de réalisation de l'invention, chaque élément du maillage est équitablement disposé sur chaque paroi de l'enceinte, c'est à dire que chaque paroi doit être recouverte par sensiblement la même longueur de chaque élément de maillage, aucun élément de surface des parois ne devant présenter de déséquilibre important dans la répartition des deux éléments de maillage.

L'invention et ses différents avantages seront mieux compris à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'une enceinte anti-intrusion selon l'invention ;
- Figure 2 : une représentation détaillée d'un des types de paroi utilisées pour réaliser l'enceinte selon l'invention ;
- Figure 3 : une représentation détaillée d'un autre type de paroi utilisée pour la réalisation de l'enceinte selon l'invention.

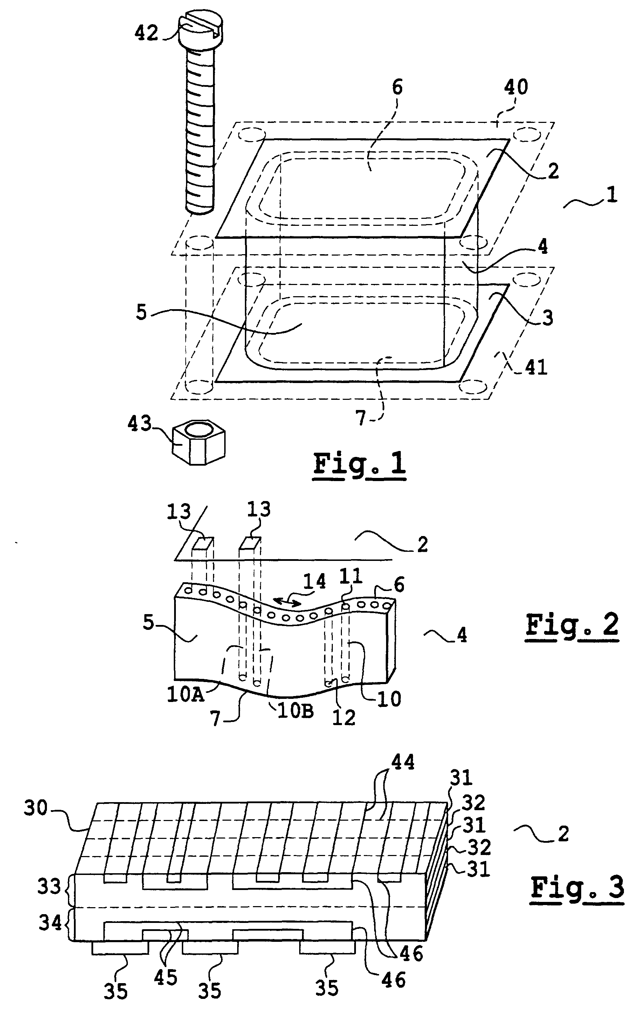

Une enceinte 1 selon l'invention est représentée à la figure 1. Cette enceinte 1 est constituée de trois parois distinctes : une première paroi 2, dite paroi supérieure, une deuxième paroi 3, dite paroi inférieure, et une troisième paroi 4 dite paroi latérale. Selon l'invention, la paroi supérieure 2 et la paroi inférieure 3 sont deux circuits imprimés. La paroi inférieure 3 est dite opposée à la paroi supérieure 2 dans la mesure où aucun point de la paroi supérieure 2 n'est en contact avec la paroi inférieure 3. Ainsi, aucune plage d'accès (définie ultérieurement) de la paroi supérieure 2 n'est directement connectée à une plage d'accès de la paroi inférieure 3. Selon l'invention, chaque point d'accès de la paroi supérieure 2 ne peut être en contact avec un point d'accès de la paroi inférieure 3 que par l'intermédiaire de conducteurs disposés dans la paroi latérale 4. De préférence, la paroi supérieure 2 et la paroi inférieure 3 sont disposées de façon parallèle, mais ce n'est pas une obligation. Des pistes de dialogues, non représentées, permettent d'échanger des informations depuis l'extérieur de l'enceinte avec des composants de l'enceinte auxquels l'accès est autorisé.

La paroi latérale 4 est réalisée dans un matériau souple, par exemple une matière siliconée. Elle constitue une boucle, le terme boucle désignant ici une forme approximativement rectangulaire, mais dont les angles sont arrondis. En effet, il n'est pas possible d'obtenir des angles parfaitement droits avec une telle matière. La paroi latérale 4 comporte une surface latérale 5, une surface supérieure 6 et une surface inférieure 7. La surface supérieure 6 est telle que la paroi supérieure 2 peut venir s'appuyer sur elle sans laisser d'espace entre la paroi supérieure 2 et la paroi latérale 4. De même, la surface inférieure 7 de la paroi latérale 4 est telle que la paroi inférieure 3 peut venir s'appuyer sur la paroi latérale 4 sans laisser d'espace libre entre ces deux parois. Ainsi, lorsque la paroi supérieure 2 et la paroi inférieure 3 sont disposées sur la paroi latérale 4, le volume compris entre ces trois parois, qui constitue le volume intérieur de l'enceinte 1, est parfaitement fermé.

Afin d'assurer la fermeture de l'enceinte selon l'invention, une première plaque ajoutée 40 et une deuxième plaque ajoutée 41 sont apposées respectivement sur le circuit imprimé constituant la paroi supérieure 2 et sur le circuit imprimé constituant la paroi inférieure 3 de l'enceinte. Ces plaques sont le plus souvent rectangulaires et présentent des dimensions légèrement supérieures à celles des parois supérieure et inférieure de telle sorte qu'à leurs coins on puisse trouer ces plaques sans trouer les parois afin de réaliser un dispositif de fixation des deux plaques entre elles : ce dispositif peut consister en un simple vissage réalisé entre les deux plaques apposées, au moyen de vis 42 et d'écrous 43. Cette opération de vissage assure la compression de la paroi latérale sur la paroi supérieure et la paroi inférieure de telle sorte que le contact électrique se fasse entre les différentes pistes des circuits imprimés et les conducteurs verticaux de la paroi latérale.

Eventuellement, une goulotte de maintien, non représentée, peut être ajoutée sur la paroi supérieure 2 et/ou sur la paroi inférieure 3. Cette goulotte permet d'aider au maintien de la paroi latérale 4. Elle doit, à cet effet, adopter le futur contour de la paroi latérale 4, soit de façon continue, soit uniquement en certains points de ce contour. La paroi latérale 4 peut ainsi venir s'appuyer sur cette goulotte, ce qui peut améliorer sa rigidité.

La figure 2 est une représentation plus détaillée de la paroi latérale 4. Cette paroi est en fait un circuit particulier, habituellement appelé circuit zébra. Un tel circuit est connu de l'état de la technique. Il est par exemple utilisé dans des claviers alphanumériques, ou des claviers de téléphone mobile, pour transmettre des signaux électriques nés de l'appui sur une touche quelconque du clavier. A la figure 2, la paroi latérale 4 a été ouverte afin d'avoir une vue plus claire de sa structure. Cette paroi est constituée d'un matériau souple, au travers duquel sont disposés un ensemble de conducteurs verticaux 10 parallèles entre eux. Ces différents conducteurs verticaux peuvent être réalisés dans différentes matières, qui peuvent être le graphite, l'argent, l'or.... A la figure 2, une unique rangée de conducteurs verticaux a été représentée ; dans d'autres modes de réalisation, il peut cependant y en avoir plus. Chaque conducteur vertical 10 traverse la paroi latérale dans sa totalité, permettant ainsi d'obtenir, pour chaque conducteur vertical, une conduction de signaux électriques entre une extrémité 11 située sur la surface supérieure 6 et une autre extrémité 12 située sur la surface inférieure 7. Les conducteurs verticaux consécutifs, par exemple le conducteur vertical 10A et le conducteur vertical 10B, sont suffisamment fin pour ne pas pouvoir être simultanément en contact avec une première plage d'accès 13 et une deuxième plage d'accès 14 d'un des circuits imprimés constituant la paroi supérieure 2 ou la paroi inférieure 3. Par ailleurs, on définit un pas 14 entre deux conducteurs verticaux 10 suffisamment fin pour empêcher toute intrusion d'un appareil de mesure depuis l'extérieur de l'enceinte 1 vers l'intérieur de l'enceinte 1. De tels appareils de mesure sont destinés à récupérer, parfois frauduleusement, des signaux électriques circulant entre différents composants électroniques de l'enceinte, dont l'interprétation peut conduire à la déduction d'informations confidentielles, et dont l'interdiction à l'accès est un objet de la présente invention. Le pas est ainsi défini de telle sorte que lors de l'intrusion d'un tel appareil de mesure au travers de la paroi latérale 4, cet appareil de mesure entre nécessairement en contact avec l'un ou l'autre des conducteurs verticaux 10.

Lorsqu'il est, comme c'est le cas dans l'enceinte 1, coincés entre deux éléments, le matériau souple englobant les connecteurs verticaux 10 peut légèrement se tasser, contrairement aux conducteurs verticaux 10 qui sont alors suffisamment exposés pour entrer en contact avec une zone de contact appropriée. Tous les conducteurs verticaux de la parois latérale 4 ne sont pas spécifiques à des plages d'accès particulières des circuits imprimés constituant la paroi supérieure 2 ou la paroi inférieure 3, ce qui enlève une contrainte dans la réalisation de l'enceinte selon l'invention. En effet, tous les conducteurs verticaux ayant la même fonction, à savoir conduire un courant entre ses extrémités 11 et 12, peu importe quel conducteur vertical sera utilisé pour réaliser cette fonction entre une plage d'accès de la paroi supérieure 2 et une plage d'accès de la paroi inférieure 3. La tolérance dans l'assemblage des différentes parois est donc peu contraignante. Aucune opération de soudure n'est évidemment nécessaire pour assurer une bonne conduction entre les différentes parois de l'enceinte.

La figure 3 montre une représentation détaillée d'une paroi de l'enceinte, cette paroi pouvant être la paroi supérieure 2 ou la paroi inférieure 3. Cette paroi est en fait un circuit imprimé 30. De préférence, dans l'invention, le circuit imprimé 30 est un circuit multicouches, c'est-à-dire qu'il possède plusieurs couches conductrices 31 isolées par des couches isolantes 32. Dans un mode de réalisation particulier des circuits imprimés 30 utilisés dans le cadre de l'invention, on peut distinguer deux ensembles de couches conductrices : un premier ensemble de couches conductrices 33 sont destinées à véhiculer des signaux électriques utiles entre différents composants électroniques 35 de l'enceinte 1, et un deuxième ensemble de couches conductrices 35 qui sont destinées à réaliser une partie du maillage de l'enceinte selon l'invention. Les composants électroniques 35 peuvent être directement disposés sur la face intérieure à l'enceinte du circuit imprimé considéré, ou tout simplement être contenu dans l'enceinte, tout en étant cependant reliés, éventuellement par l'intermédiaire d'autres composants électroniques, au premier ensemble de couches conductrices 33. De tels circuits imprimés multicouches existent dans l'état de la technique et leur structure ne sera pas présentée en détail dans ce document. Il est cependant rappelé qu'il peut exister des jonctions verticales, appelées puits de conduction 46, entre différentes couches conductrices permettant ainsi, lorsque c'est nécessaire, de faire transiter des signaux sur plusieurs couches conductrices.

D'une façon générale, les signaux, qu'ils soient des signaux utiles ou qu'il s'agisse uniquement d'un signal électrique circulant dans le maillage, sont véhiculés sur des éléments de couches conductrices appelés pistes, le plus souvent réalisées en cuivre. Dans l'invention, on utilise un ensemble de pistes 44 du premier ensemble de couches conductrices pour réaliser une partie du maillage de l'enceinte 1. Ces pistes sont symboliquement représentées sous la forme d'un quadrillage sur le circuit imprimé 30. Elles se distinguent des pistes utiles 45 utilisées pour transmettre les signaux utiles.

Plusieurs possibilités de réalisation sont envisagées: soit une couche conductrice est destinée à faire circuler uniquement et exclusivement des signaux électriques utiles entre les composants 35 ou exclusivement un courant électrique dans le maillage, soit une couche conductrice est destinée à faire circuler des signaux électriques utiles et un courant électrique dans le maillage : en d'autres termes soit le premier ensemble de couches conductrices 33 et le deuxième ensemble de couches conductrices 34 sont totalement dissociés, soit certaines couches conductrices peuvent appartenir au premier ensemble et au deuxième ensemble 33 et 34. Cependant, dans la deuxième possibilité de réalisation, chaque piste conductrice demeure exclusivement réservée soit à un signal électrique circulant entre les différents composants 35, soit à un courant électrique susceptible de circuler dans le maillage.

Dans certains modes de réalisation de l'enceinte selon l'invention, le premier ensemble de couches conductrices 33 n'est pas présent sur la paroi supérieure ou sur la paroi inférieure de l'enceinte. Par contre, le deuxième ensemble de couches conductrices 34, qui permettent de réaliser un maillage protecteur de l'enceinte, est nécessairement présent sur la paroi supérieure 2 et sur la paroi inférieure 3 de l'enceinte. Dans tous les cas envisagés, le deuxième ensemble de couches conductrices est disposé du côté externe de la paroi, c'est à dire du côté de la paroi qui sera le premier exposé à une tentative d'intrusion dans l'enceinte 1. Une distance maximale ente les différentes pistes conductrices constituant le maillage doit être respectée afin qu'aucune mesure de signaux ne puisse être effectuée depuis l'extérieur de l'enceinte sans rencontrer une de ces pistes. Ainsi, dans l'invention, on envisage de laisser un pas maximum d'environ un millimètre entre deux pistes d'un circuit imprimé intervenant dans le maillage.

Afin de pouvoir entrer en contact avec les extrémités 11 ou 12 des conducteurs verticaux de la paroi latérale 4, des puits de conduction non représentés sont disposés dans les circuits imprimés, l'extrémité de ces puits de conduction s'achevant au niveau de la zone du circuit imprimé en contact avec la paroi latérale 4 par des plages de conduction telles que les plages de conduction 13 et 14 de la figure 2.

Les caractéristiques structurelles du maillage utilisé dans l'enceinte selon l'invention sont les suivantes : le maillage est constitué de trois morceaux, un premier morceau étant constitué par les pistes conductrices réservées au maillage de la paroi supérieure 2, un deuxième morceau étant constitué par les pistes conductrices réservées au maillage de la paroi inférieure 3, et un troisième morceau étant constitué par les conducteurs verticaux de la paroi latérale 4. Dans un mode de réalisation préféré, le maillage, constitué par la réunion des trois morceaux de maillages qui viennent d'être mentionnés, est en fait constitué de deux éléments continus de maillage non reliés entre eux : cela signifie qu'il existe dans le maillage un premier élément de maillage constitué par un ensemble de pistes de la paroi supérieure 2, par un ensemble de pistes de la paroi inférieure 3 et de conducteurs verticaux 10 de la paroi latérale 4, et un deuxième élément de maillage constitué par d'autres pistes de la paroi inférieure 3, d'autres pistes de la paroi supérieure 2, et d'autres conducteurs verticaux de la paroi latérale 4, si bien que les deux éléments de maillage peuvent être assimilés à deux fils continus et distincts entourant l'intérieur de l'enceinte 1 sans jamais être en contact entre eux.

L'intérêt d'une telle réalisation est d'exploiter au mieux les propriétés piezzo-résistives de chaque élément de maillage. En effet, chaque élément de maillage est un conducteur qui présente une valeur résistive qui lui est propre. Ainsi, chaque élément de maillage peut être représenté par une résistance, une variation de cette résistance pouvant être détectée au moyen d'un montage de type connu appelé pont de Wheatstone. Chacun des deux éléments de maillage constitue une des quatre résistances de ce pont, les deux autres résistances et le circuit de mesure pouvant être intégrés dans un circuit intégré qui peut être un des composants électroniques 35. L'intégration des deux éléments de maillage dans un pont de Wheatstone permet de détecter une variation relative de la valeur de la résistance de ces deux éléments de maillage.

A chaque mise en service des composants électroniques contenus dans l'enceinte selon l'invention, la valeur résistive de chaque élément est mesuré et mémorisé dans un module de mémoire de préférence contenu dans l'enceinte. Un microprocesseur, par exemple contenu dans l'enceinte, associé à un ensemble d'applications peut alors permettre de mesurer en permanence la valeur résistive des éléments de maillage, et de détecter ainsi une variation significative de ces valeurs résistives. Une telle variation peut être interprétée par le microprocesseur comme une tentative d'intrusion dans l'enceinte selon l'invention, le microprocesseur pouvant alors commander les différentes applications d'interruption ou de mise hors service de composants placés dans l'enceinte selon l'invention. L'intérêt d'utiliser un montage du type pont de Wheatstone est que ce type de montage permet de mesurer une variation relative des deux valeurs résistives. Cela permet d'éviter d'interpréter comme une tentative d'intrusion une variation de la valeur résistive des éléments de maillage due à un échauffement provoqué par l'échauffement des composants électroniques de l'enceinte, encore faut-il que les deux éléments de maillage soient uniformément répartis sur la totalité de la surface de l'enceinte. Ainsi, une autre caractéristique secondaire de l'invention est le fait que les deux éléments de maillage sont répartis équitablement sur la totalité de la surface de l'enceinte. Par répartition équitable, on désigne le fait que sur une unité de surface donnée, par exemple de l'ordre du centimètre carré, on dispose sensiblement de la même longueur d'éléments conducteurs pour le premier maillage et pour le deuxième maillage.

Toute tentative d'intrusion entraînant la modification d'une des valeurs résistives d'un des éléments de maillage est ainsi détecté. Une simple tentative d'intrusion consiste en une opération de dévissage des plaques apposées sur les parois supérieure et inférieure est également détectée : en effet, le simple fait de dévisser ces plaques entraîne une décompression de la paroi latérale 4, cette décompression modifiant par effet piezzo résistif la valeur résistive d'au moins un des éléments de maillage. Ainsi, l'enceinte anti-intrusion selon l'invention permet de détecter une tentative d'intrusion même lorsque cette dernière ne provoque pas de ruptures d'un fil conducteur constituant le maillage. Un des grands avantages de l'enceinte anti-intrusion selon l'invention est d'utiliser les technologies connues pour effectuer un maillage, ce maillage pouvant ainsi être réalisé de façon industrielle.

## Revendications

1. Enceinte anti-intrusion (1) pour protéger un accès à des composants électroniques (35) au sein de l'enceinte (1) et/ou à des données circulant entre ces composants électroniques (35) **caractérisé en ce qu'**il comporte :
- un premier circuit imprimé multicouches constituant une première paroi (2) de l'enceinte (1), pouvant comporter un premier ensemble (33) de couches constitué d'une ou plusieurs couches conductrices, ces couches conductrices (31) pouvant présenter des pistes conductrices nécessaires à la circulation de signaux électriques utiles entre différents composants électroniques (35) contenus dans l'enceinte (1), et comportant un deuxième ensemble (34) de couches conductrices, constitué d'une ou plusieurs couches conductrices (31), présentant des pistes conductrices pour réaliser un premier morceau de maillage ;
- un deuxième circuit imprimé multicouches constituant une deuxième paroi (3) de l'enceinte (1) opposée à la première paroi (2), pouvant comporter un premier ensemble (33) de couches conductrices constitué d'une ou plusieurs couches conductrices (31), ces couches conductrices pouvant présenter des pistes conductrices nécessaires à la circulation de signaux électriques utiles entre différents composants électroniques (35) contenus dans l'enceinte (1), et comportant un deuxième ensemble (34) de couches conductrices, constitué d'une ou plusieurs couches conductrices(31), présentant des pistes conductrices pour réaliser un deuxième morceau de maillage ;
- une troisième paroi (4), en forme de boucle, réalisée dans une matière souple contenant un ensemble de conducteurs parallèles (10) constituant un troisième morceau de maillage pour assurer la jonction entre des points de connexion (13) du premier morceau de maillage et des points de connexion (11 ;12) du deuxième morceau de maillage, la troisième paroi (4) assurant la fermeture de l'enceinte (1).

2. Enceinte anti-intrusion (1) selon la revendication précédente **caractérisé en ce que** le premier ensemble (33) de couches et le deuxième ensemble (34) de couches du premier circuit imprimé ou du deuxième circuit imprimé ne sont pas nécessairement disjoints.

3. Enceinte anti-intrusion (1) selon l'une des revendications précédentes **caractérisé en ce qu'**il comporte une première plaque de maintien (40) disposée sur une face externe de la première paroi (2), une deuxième plaque de maintien (41) disposée sur une face externe de la deuxième paroi (3), la première et la deuxième plaque étant reliées entre elles par des moyens d'attache de façon à exercer une pression constante sur les trois parois constituant l'enceinte (1).

4. Enceinte anti-intrusion (1) selon la revendication précédente **caractérisé en ce que** les moyens d'attache sont des vis des écrous.

5. Enceinte anti-intrusion (1) selon l'une des revendications précédentes **caractérisé en ce que** un maillage, formé de l'assemblage du premier, du deuxième et du troisième morceau de maillage, est constitué de deux éléments de maillage distincts, ces deux éléments étant entrelacés dans l'ensemble des parois constituant l'enceinte (1).

6. Enceinte anti-intrusion (1) selon la revendication 5 **caractérisé en ce que** chaque élément du maillage possède une valeur résistive propre qui est mémorisée dans un module de mémoire.

7. Enceinte anti-intrusion (1) selon la revendication précédente **caractérisé en ce que** le module de mémoire est contenu dans l'enceinte (1).

8. Enceinte anti-intrusion (1) selon l'une des revendications 6 ou 7 **caractérisé en ce qu'**il comporte un dispositif de détection d'une variation relative de la valeur résistive de chaque élément du maillage.

9. Enceinte anti-intrusion (1) selon l'une des revendications 5 à 8 **caractérisé en ce que** chaque élément du maillage est équitablement disposé sur chaque paroi de l'enceinte (1).

10. Enceinte anti-intrusion (1) selon l'une des revendications 6 à 9 **caractérisé en ce qu'**elle comporte un microprocesseur disposé à l'intérieur de l'enceinte (1) pour exploiter une information relative à une variation relative de la valeur résistive propre de chaque maillage.

11. Enceinte anti-intrusion (1) selon l'une des revendications 6 à 10 **caractérisé en ce qu'**elle comporte des moyens de détérioration d'un ou plusieurs composants électroniques de l'enceinte (1), ces moyens étant mis en oeuvre lorsque lors d'une détection de variation relative de la valeur résistive propre de chaque maillage supérieure à une valeur seuil prédéterminée.

12. Enceinte anti-intrusion (1) selon la revendication précédente **caractérisé en ce que** la valeur seuil est mémorisée dans le module de mémoire.

13. Enceinte anti-intrusion (1) selon l'une des revendication précédentes **caractérisé en ce que** un pas du maillage est inférieur au millimètre.

## Patentansprüche

1. Eindringschutzeinschluss (1) zum Schützen eines Zugangs zu elektronischen Bauteilen (35) innerhalb des Einschlusses (1) und/oder zu Daten, die zwischen diesen elektronischen Bauteilen (35) zirkulieren, **dadurch gekennzeichnet, dass** er Folgendes umfasst:
- eine erste Mehrschichten-Leiterplatte, die eine erste Wand (2) des Einschlusses (1) bildet, die eine erste Einheit (33) von Schichten umfassen kann, die aus einer oder mehreren leitenden Schichten besteht, wobei diese leitenden Schichten (31) erforderliche 10065itende Pisten für die Zirkulation elektrischer Nutzsignale zwischen verschiedenen elektronischen Bauteilen (35) aufweisen können, die in dem Einschluss (1) enthalten sind, und eine zweite Einheit (34) leitender Schichten umfasst, die aus einer oder mehreren leitenden Schichten (31) gebildet ist, die leitende Pisten zum Herstellen eines ersten Vermaschungsstücks aufweisen;
- eine zweite Multischichten-Leiterplatte, die eine zweite Wand (3) des Einschlusses (1) der ersten Wand (2) gegenüberliegend bildet, die eine erste Einheit (33) leitender Schichten bestehend aus einer oder mehreren leitenden Schichten (31) umfassen kann, wobei diese leitenden Schichten leitende Pisten aufweisen können, die für die Zirkulation elektrischer Nutzsignale zwischen verschiedenen elektronischen Bauteilen (35), die in dem Einschluss (1) enthalten sind, erforderlich sind, und eine zweite Einheit (34) leitender Schichten gebildet aus einer oder mehreren leitenden Schichten (31) umfasst, die leitende Pisten zum Herstellen eines zweiten Vermaschungsstücks aufweisen;
- eine dritte Wand (4) in Schleifenform, hergestellt aus einem biegsamen Werkstoff, die eine Einheit paralleler Leiter (10) enthält, die ein drittes Vermaschungsstück bilden, um die Verbindung zwischen den Anschlusspunkten (13) des ersten Vermaschungsstücks und den Anschlusspunkten (11; 12) des zweiten Vermaschungsstücks sicherzustellen, wobei die dritte Wand (4) das Schließen des Einschlusses (1) sicherstellt.

2. Eindringschutzeinschluss (1) nach dem vorhergehenden Anspruch, **dadurch gekennzeichnet, dass** die erste Einheit (33) von Schichten und die zweite Einheit (34) von Schichten der ersten Leiterplatte oder der zweiten Leiterplatte nicht unbedingt getrennt sind.

3. Eindringschutzeinschluss (1) nach einem der vorhergehenden Ansprüche, **dadurch gekennzeichnet, dass** er eine erste Halteplatte (40) angeordnet auf einer äußeren Fläche der ersten Wand (2), eine zweite Haltefläche (41) angeordnet auf einer äußeren Fläche der zweiten Wand (3) umfasst, wobei die erste und die zweite Halteplatte untereinander durch Befestigungsmittel verbunden sind, sodass sie einen konstanten Druck auf die drei den Einschluss (1) bildenden Wände ausüben.

4. Eindringschutzeinschluss (1) nach dem vorhergehenden Anspruch, **dadurch gekennzeichnet, dass** die Befestigungsmittel Schrauben und Muttern sind.

5. Eindringschutzeinschluss (1) nach einem der vorhergehenden Ansprüche, **dadurch gekennzeichnet, dass** eine Vermaschung, gebildet aus dem Zusammenfügen des ersten, des zweiten und des dritten Vermaschungsstücks von zwei getrennten Vermaschungselementen gebildet wird, wobei diese Elemente in der Einheit der Wände, die den Einschluss (1) bilden, verschlungen sind.

6. Eindringschutzeinschluss (1) nach Anspruch 5, **dadurch gekennzeichnet, dass** jedes Element der Vermaschung einen Eigenresistivitätswert besitzt, der in einem Speichermodul gespeichert ist.

7. Eindringschutzeinschluss (1) nach dem vorhergehenden Anspruch, **dadurch gekennzeichnet, dass** das Speichermodul in dem Einschluss (1) enthalten ist.

8. Eindringschutzeinschluss (1) nach einem der Ansprüche 6 oder 7, **dadurch gekennzeichnet, dass** er eine Vorrichtung zum Erkennen einer relativen Schwankung des Resistivitätswerts jedes Elements der Vermaschung umfasst.

9. Eindringschutzeinschluss (1) nach einem der Ansprüche 5 bis 8, **dadurch gekennzeichnet, dass** jedes Element der Vermaschung gleichförmig auf jeder Wand des Einschlusses (1) angeordnet ist.

10. Eindringschutzeinschluss (1) nach einem der Ansprüche 6 bis 9, **dadurch gekennzeichnet, dass** er im Inneren des Einschlusses (1) angeordnet einen Mikroprozessor zum Nutzen einer Information in Zusammenhang mit einer relativen Schwankung des Resistivitätswerts, der jeder Vermaschung eigen ist, umfasst.

11. Eindringschutzeinschluss (1) nach einem der Ansprüche 6 bis 10, **dadurch gekennzeichnet, dass** er Mittel zum Beschädigen eines oder mehrerer elektronischer Bauteile des Einschlusses (1) umfasst, wobei diese Mittel angewandt werden, wenn ein Erfassen einer relativen Schwankung des Eigenresistivitätswerts jeder Vermaschung erkannt wird, das größer ist als ein vorausbestimmter Schwellenwert.

12. Eindringschutzeinschluss (1) nach dem vorhergehenden Anspruch, **dadurch gekennzeichnet, dass** der Schwellenwert in dem Speichermodul gespeichert ist.

13. Eindringschutzeinschluss (1) nach einem der vorhergehenden Ansprüche, **dadurch gekennzeichnet, dass** die Maschenweite kleiner ist als der Millimeter.

## Claims

1. An anti-intrusion housing (1) for protecting access to electronic components (35) within the housing (1) and/or data circulating between these electronic components (35) **characterized in that** the housing comprises:
- A first multilayer printed circuit comprising a first wall (2) of the housing (1), which may comprise a first assembly (33) of layers comprised of one or more conductive layers, these conductive layers (31) may present conductive tracks necessary for useful electric signals to circulate between different electronic components (35) contained in the housing (1), and comprising a second assembly (34) of conductive layers, comprised of one or more conductive layers (31), presenting conductive tracks for making a first piece of meshing;
- A second multilayer printed circuit comprising a second wall (3) of the housing (1) opposite from the first wall (2), which may comprise a first assembly (33) of conductive layers comprising one or more conductive layers (31), wherein these conductive layers may present conductive tracks necessary for useful electric signals to circulate between the different electronic components (35) contained in the housing (1), and comprising a second assembly (34) of conductive layers, comprised of one or more conductive layers (31), presenting conductive tracks for making a second piece of meshing;
- A third wall (4), in the form of a ring, made of a flexible material containing an assembly of parallel conductors (10) comprising a third piece of meshing for ensuring the junction between the connection points (13) of the first piece of meshing and the connection points (11, 12) of the second piece of meshing, the third wall (4) ensuring the closing of the housing (1).

2. The anti-intrusion housing (1) according to the previous claim **characterized in that** the first assembly (33) of layers and the second assembly (34) of layers of the first printed circuit or the second printed circuit are not necessarily disconnected.

3. The anti-intrusion housing (1) according to the previous claims **characterized in that** the housing comprises a first holding plate (40) disposed on the external surface of the first wall (2), a second holding plate (41) disposed on the external surface of the second wall (3), the first and second plate being interconnected by a fastening means so that a constant pressure on the three walls comprising the housing (1) may be exercised.

4. The anti-intrusion housing (1) according to the previous claim **characterized in that** the fastening means are screw nuts.

5. The anti-intrusion housing (1) according to one of the previous claims **characterized in that** a meshing, formed of the assembly of the first, second and third piece of meshing, is comprised of two distinct meshing elements, these two elements being interlaced in the assembly of walls comprising the housing (1).

6. The anti-intrusion housing (1) according to claim 5 **characterized in that** each meshing element has a specific resistance value that is stored in a memory module.

7. The anti-intrusion housing (1) according to the previous claim **characterized in that** the memory module is contained in the housing (1).

8. The anti-intrusion housing (1) according to one of claims 6 or 7 **characterized in that** the housing comprises a device for detecting a relative variation in the resistance value of each meshing element.

9. The anti-intrusion housing (1) according to one of claims 5 to 8 **characterized in that** each meshing element is evenly disposed on each wall of the housing (1) .

10. The anti-intrusion housing (1) according to one of claims 6 to 9 **characterized in that** the housing comprises a microprocessor disposed inside the housing (1) to manage information related to a relative variation in the specific resistance value of each meshing.

11. The anti-intrusion housing (1) according to one of claims 6 to 10 **characterized in that** the housing comprises means for degrading one or more electronic components of the housing (1), these means being implemented when the relative variation in the specific resistance value of each meshing is detected to be greater than a given threshold value.

12. The anti-intrusion housing (1) according to the previous claim **characterized in that** the threshold value is stored in the memory module.

13. The anti-intrusion housing (1) according to one of the previous claims **characterized in that** a meshing spacing is less than one millimeter.
